# EUROPÄISCHE PATENTSCHRIFT

(11) **EP 1 604 533 B1**
(45) Veröffentlichungstag und Bekanntmachung des Hinweises auf die Patenterteilung: **23.08.2006**
(21) Anmeldenummer: 04721460.6
(22) Anmeldetag: 18.03.2004
(51) Int. Cl.: H04Q 3/00

(54) **VERFAHREN ZUR ECHTZEITERFASSUNG VON GEBÜHREN FÜR MEHRWERTDIENSTE IN EINEM TELEKOMMUNIKATIONSNETZ**
METHOD FOR THE REAL-TIME DETERMINATION OF CHARGES FOR VALUE-ADDED SERVICES IN A TELECOMMUNICATIONS NETWORK
PROCEDE DE DETERMINATION EN TEMPS REEL DE TAXATIONS DE SERVICES A VALEUR AJOUTEE DANS UN RESEAU DE TELECOMMUNICATION

(30) Priorität: 20.03.2003 DE 10312049
(43) Veröffentlichungstag der Anmeldung: 14.12.2005
(73) Patentinhaber: T-Mobile Deutschland GmbH, 53227 Bonn (DE)
(72) Erfinder: VÖHRINGER, Gerrit, 53111 Bonn (DE)
(74) Vertreter: Riebling, Peter
(86) Internationale Anmeldenummer: PCT/DE2004/000563
(87) Internationale Veröffentlichungsnummer: WO 2004/084563

(56) Entgegenhaltungen:
- EP-A- 0 604 042
- WO-A-01/26353

## Beschreibung

Die vorliegende Erfindung betrifft ein Verfahren zur Echtzeiterfassung von Gebühren für Mehrwertdienste in einem Telekommunikationsnetz.

Es existieren unterschiedliche Verfahren zur Realisierung von Mehrwertdiensten in Telekommunikationsnetzen. So werden Mehrwertdienste in Telekommunikationsnetzen, wie z.B. Festnetzen und Mobilfunknetzen, zum einen als Dienste des Netzbetreibers angeboten. Üblich sind kommunikationsspezifische Dienste, die den verbindungsorientierten Verkehr erleichtern oder erweitern. Die bekanntesten Vertreter dieser Art sind ISDN- (Integrated Services Digital Network) und GSM- (Global System for Mobile Communications) Leistungsmerkmale der entsprechenden ETSI- (European Telecommunications Standards Institute) Empfehlungen, wie Rufumleitung, Rufweiterleitung, Rückruf bei Besetzt, Anklopfen etc. Diese Dienste werden netzbetreiberseitig im Telekommunikationsnetz (in den Vermittlungsstellen bzw. in der Intelligenten Netzsteuerung SCP (Service Control Point) und SMS (Service Management System) implementiert und betrieben. Daneben existieren Mehrwertdienste, wie Mailbox (Anrufbeantworter), Messaging, Ansagedienste, Informationsdienste (Wetter, Lottozahlen, Nachrichten, o. ä.), die netzbetreiberseitig oder von externen Mehrwertdiensteanbietern angeboten werden. Hierunter können auch Verkehrsinformationsdienste gruppiert werden. Diese Servicekategorie kann in der Regel nur von netzspezifischen Kunden durch Anwahl entsprechender Rufnummern erreicht werden, wobei in der Regel mit der Anwahl des Mehrwertdiensteanbieters die Inanspruchnahme des Dienstes verbunden ist und ein entsprechendes Entgelt automatisch über die Telekommunikationsrechnung gebucht wird. Hierbei ist es bisher nicht möglich, die Gebühren des in Anspruch genommenen Mehrwertdienst im Telekommunikationsnetz in Echtzeit zu erfassen oder innerhalb eines Anrufs zu einem Mehrwertdiensteanbieter den Tarif zu wechseln.

WO 01/26353 A1 offenbart ein Verfahren zur Änderung der Taxierungsart von Kommunikationsverbindungen während einer Verbindung, insbesondere bei der Nutzung von Mehrwertdiensten, wobei ein Anrufer einen Mehrwertdienst durch Wahl einer zugeordneten Zielrufnummer anwählen kann und die Zielrufnummer in einem Netzelement eines intelligenten Netzes (IN) des Telekommunikationsnetzes erfasst wird. Diese Zielrufnummer wird im IN-Netzelement umgewandelt in eine spezielle Zugangsnummer für den Mehrwertdienst. Mittels dieser speziellen Zugangsnummer wird nun einer Verbindung zwischen dem IN-Netzelement und dem Mehrwertdienstanbieter unter Verwendung der Zugangsnummer aufgebaut und zum Anrufer durchgeschaltet.

Die Aufgabe der Erfindung besteht darin, ein Verfahren anzugeben, das eine Echtzeiterfassung von Gebühren für Mehrwertdienste durch ein Telekommunikationsnetz erlaubt.

Diese Aufgabe wird erfindungsgemäß durch die Merkmale des Patentanspruchs 1 gelöst.

Vorteilhafte Ausgestaltungen und Weiterbildungen der Erfindung sind in den Unteransprüchen angegeben.

Der Vorteil der Erfindung besteht darin, dass der Netzbetreiber des Telekommunikationsnetzes, und gegebenenfalls der Anrufer selbst, unmittelbar über den gültigen Tarif des Mehrwertdienstes informiert wird, so dass beim Netzbetreiber eine Echtzeitvergebührung des Dienstes erfolgen kann. Dies ist insbesondere vorteilhaft wenn der Anruf über ein sogenanntes Prepaid-Teilnehmerverhältnis abgerechnet werden soll, wobei hier das Entgeld für den Mehrwertdienst unmittelbar vom Prepaid-Konto abgebucht werden kann.
In vorteilhafter Weise ermöglicht das beschriebene Verfahren auch einen Tarifwechsel innerhalb eines Anrufs zu einem Mehrwertdiensteanbieter.

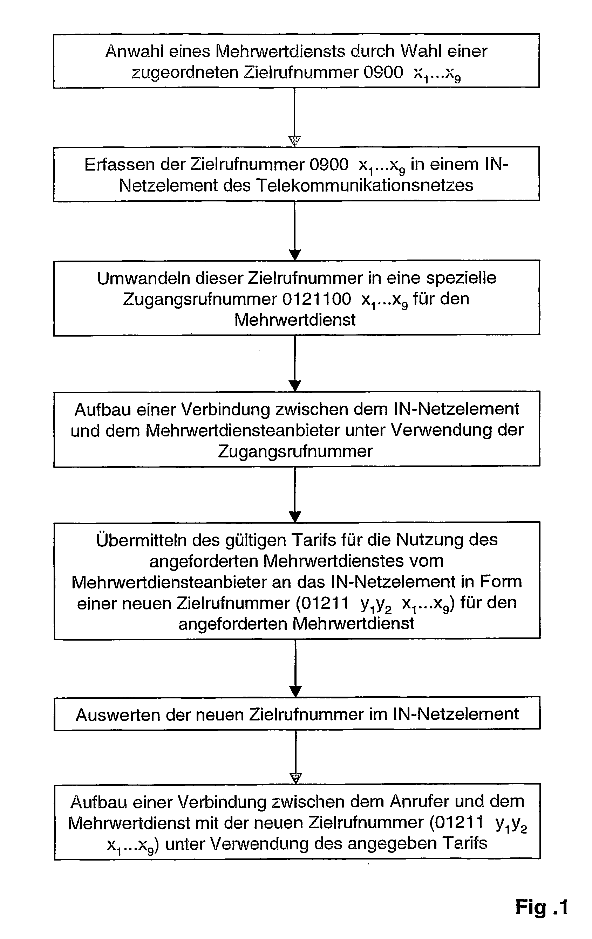

Ein Ausführungsbeispiel der Erfindung wird nachfolgend in Verbindung mit Figur 1 erläutert. Figur 1 beschreibt die generellen Schritte zur Durchführung des Verfahrens.

In diesem Ausführungsbeispiel wird davon ausgegangen, dass ein Teilnehmer eines Mobilfunknetzes über sein Mobilfunkendgerät einen in einem Festnetz angesiedelten Mehrwehrdienst nutzen möchte. Ein Mehrwertdienst wird typischerweise über eine spezielle Rufnummer, zum Beispiel eine sogenannte 0900-Rufnummer angerufen. Im Festnetz wird dabei der Tarif gewöhnlich erst mit der Bereitstellung der Verbindung festgelegt (Offline-Billing). Dies ermöglicht keine Echtzeitgebührenerfassung durch den Netzbetreiber des Mobilfunknetzes.

Erfindungsgemäß wird der Anruf zu einer 0900-Rufnummer, zum Beispiel zu der Nummer 0900 x₁...x₉, wobei der Nummernbestandteil x₁...x₉ den Mehrwertdienst kennzeichnet, zunächst in einem IN-Netzelement des Mobilfunknetzes abgefangen und in eine vorgegebene Zugangsrufnummer, z.B. 0121100 x₁...x₉, des Mehrwertdienstes umgewandelt. Mit dieser Rufnummer wird zwischen dem IN-Netzelement und dem Mehrwertdiensteanbieter, z.B. einem entsprechenden Kommunikationsserver, eine Verbindung aufgebaut. Der Anruf zu dieser Zugangsrufnummer erfolgt für den Anrufer unbemerkt und kostenlos. Anhand der Kennzeichnung des Mehrwertdienstes durch den vorhandenen Nummernbestandteil x₁...x₉ kann der Angerufene, also der Mehrwertdiensteanbieter, den Tarif ermitteln, der für die Inanspruchnahme des Dienstes erhoben werden soll. Dieser Tarif wird durch Signalisierung vom Mehrwertdiensteanbieter an das IN-Netzelement des Mobilfunknetzbetreibers übermittelt, und zwar durch die Übertragung einer neuen Zielrufnummer für den angeforderten Mehrwertdienst. Zur Übertragung der neuen Zielrufnummer kann erfindungsgemäß die User-To-User-Information USR in der Release-Message (Auslösenachricht) verwendet werden. Die Release Message ist eine Nachricht, die abschnittsweise in beiden Richtungen eines IN-Netzwerkes gesendet werden kann. Dieser Befehl leitet den Verbindungsabbau des Nutzkanals ein Die USR Nachricht kann über eine Ende-zu-Ende-Verbindung mittels SCCP-Protokoll gesendet werden.

Die übermittelte Zielrufnummer hat zum Beispiel die Form 01211 y₁y₂ x₁...x₉, wobei in den Stellen y₁y₂ der Tarif kodiert ist; in diesem Beispiel sind also 99 Tarifstufen möglich. Die Release-Message wird vom IN-Netzelement des Mobilfunknetzbetreibers ausgewertet und eine Verbindung zwischen dem ursprünglichen Anrufer und dieser Rufnummer initiiert. In den Abrechnungsdaten, dem sogenannten Billing-Record, ist nun als Rufnummer die neue Rufnummer 01211 y₁y₂ x₁...x₉ enthalten, die den Abrechungssystemen eine Tarifzuordnung ermöglicht. Weiterhin kann diese Rufnummer genutzt werden, um dem Anrufer eine Preisansage einzuspielen. Will jetzt der Mehrwertdiensteanbieter den Tarif wechseln, so beendet er den Anruf und sendet in der Release-Message eine neue Zielrufnummer, zum Beispiel 0121 z₁z₂ x₁...x₉; der vorher beschriebene Vorgang wiederholt sich, das heißt die Release-Message wird vom IN des Mobilfunknetzbetreibers ausgewertet und eine Verbindung zwischen dem ursprünglichen Anrufer und der neuen Rufnummer initiiert, natürlich unter Berücksichtigung des neuen Tarifs. Dieses Verfahren kann beliebig oft wiederholt werden.

Der Mehrwertdienstebetreiber kann bei Bedarf anhand des Anrufers (CgPty) einen Kontext halten, so dass der Anrufer bei Eintritt in die nächste Preisstufe nicht als neuer Anrufer behandelt wird, denn physikalisch erfolgt ja ein neuer Rufaufbau.

## Patentansprüche

1. Verfahren zur Echtzeiterfassung von Gebühren für Mehrwertdienste in einem Telekommunikationsnetz mit IN-Netzstruktur, bei dem ein Anrufer einen Mehrwertdienst durch Wahl einer zugeordneten Zielrufnummer anwählt, mit den Schritten:
Erfassen der Zielrufnummer in einem IN-Netzelement des Telekommunikationsnetzes und Umwandeln dieser Zielrufnummer in eine spezielle Zugangsrufnummer für den Mehrwertdienst;
Aufbau einer Verbindung zwischen dem IN-Netzelement und dem Mehrwertdiensteanbieter unter Verwendung der Zugangsrufnummer; **gekennzeichnet durch** die Schritte:
Übermitteln des gültigen Tarifs für die Nutzung des angeforderten Mehrwertdienstes vom Mehrwertdiensteanbieter an das IN-Netzelement in Form einer neuen Zielrufnummer für den angeforderten Mehrwertdienst, wobei die Übertragung der neuen Zielrufnummer mittels einer User-To-User-Information in der Release-Message erfolgt;
Auswerten der neuen Zielrufnummer im IN-Netzelement; und
Aufbau einer Verbindung zwischen dem Anrufer und dem Mehrwertdienst mit der neuen Zielrufnummer unter Verwendung des angegeben Tarifs.

2. Verfahren nach Anspruch 1, **dadurch gekennzeichnet, dass** während der Nutzung eines Mehrwertdienstes jederzeit ein Wechsel des Tarifs durch den Mehrwertdiensteanbieter vornehmbar ist, indem dieser die aktuelle Verbindung beendet und in der Release-Message eine neue Zielrufnummer sendet, wobei anhand der neuen Zielrufnummer eine Verbindung zwischen dem Anrufer und der neuen Rufnummer unter Verwendung des neuen Tarifs aufgebaut wird.

3. Verfahren nach einem der Ansprüche 1 oder 2, **dadurch gekennzeichnet, dass** der Mehrwertdienst durch einen bestimmten Bestandteil der Rufnummer **gekennzeichnet** wird.

4. Verfahren nach einem der Ansprüche 1 bis 3, **dadurch gekennzeichnet, dass** der Tarif durch einen bestimmten Bestandteil der Zielrufnummer kodiert ist.

5. Verfahren nach einem der Ansprüche 1 bis 4, **dadurch gekennzeichnet, dass** im Billing-Record als Rufnummer die neue Rufnummer eingetragen wird, die den Abrechungssystemen eine Tarifzuordnung ermöglicht.

6. Verfahren nach einem der Ansprüche 1 bis 5, **dadurch gekennzeichnet, dass** dem Anrufer entsprechend dem ermittelten Tarif eine Preisinformation auf sein Mobilfunkendgerät übermittelt wird.

## Claims

1. Method for real time acquisition of fees for value-added services in a telecommunication network with IN network structure, in which a caller selects a value-added service by dialling an allocated destination call number, with the steps:
acquiring the destination call number from an IN network element of the telecommunication network and converting this destination call number into a special access call number for the value-added service;
set-up of a connection between the IN network element and the value-added service provider, using the access call number,
**characterised by** the steps:
communicating the valid tariff for the use of the requested value-added service by the value-added service provider to the IN network element in the form of a new destination call number for the requested value-added service, transmission of the new destination call number being done by an item of user-to-user information in the release message;
evaluation of the new destination call number in the IN network element and
set-up of a connection between the caller and the added-value service with the new destination call number, using the cited tariff.

2. Method according to claim 1, **characterised in that** during the use of a value-added service a change in tariff may be made by the value-added service provider at any time, **in that** the provider terminates the current connection and in the release message sends a new destination call number, wherein with the aid of the new destination call number a connection is set up between the caller and the new call number using the new tariff.

3. Method according to one of claims 1 or 2, **characterised in that** the value-added service is **characterised by** a particular component of the call number.

4. Method according to one of claims 1 to 3, **characterised in that** the tariff is coded by a particular component of the destination call number.

5. Method according to one of claims 1 to 4, **characterised in that** in the billing record the new call number which enables the billing systems to allocate tariffs is entered as call number.

6. Method according to one of claims 1 or 5, **characterised in that** an item of price information corresponding to the determined tariff is communicated to the caller on his mobile radio terminal.

## Revendications

1. Procédé pour enregistrer en temps réel les taxes pour des services à valeur ajoutée dans un réseau de télécommunication avec une structure de réseau RI, selon lequel un appelant choisit un service à valeur ajoutée en composant un numéro d'appel de destination associé, avec les phases suivantes :
enregistrement du numéro d'appel de destination dans un élément de réseau RI du réseau de télécommunication et conversion de ce numéro en un numéro d'appel d'accès spécial pour le service à valeur ajoutée ;
établissement d'une liaison entre l'élément de réseau RI et le prestataire de service à valeur ajoutée, à l'aide du numéro d'appel d'accès ;
**caractérisé par** les phases suivantes :
transmission du tarif en vigueur pour l'utilisation du service à valeur ajoutée demandé, du prestataire de service à valeur ajoutée vers l'élément de réseau RI sous la forme d'un nouveau numéro d'appel de destination pour le service à valeur ajoutée demandé, le transfert du nouveau numéro d'appel de destination se faisant à l'aide d'une information d'usager à usager dans le message de libération ;
évaluation du nouveau numéro d'appel de destination dans l'élément de réseau RI ; et
établissement d'une liaison entre l'appelant et le service à valeur ajoutée avec le nouveau numéro d'appel de destination, à l'aide du tarif indiqué.

2. Procédé selon la revendication 1, **caractérisé en ce que** pendant l'utilisation d'un service à valeur ajoutée, le prestataire de service à valeur ajoutée peut à tout moment procéder à un changement du tarif en mettant fin à la liaison actuelle et en envoyant dans le message de libération un nouveau numéro d'appel de destination, une liaison étant établie entre l'appelant et le nouveau numéro d'appel, grâce au nouveau numéro d'appel de destination, à l'aide du nouveau tarif.

3. Procédé selon la revendication 1 ou 2, **caractérisé en ce que** le service à valeur ajoutée est **caractérisé par** un élément défini du numéro d'appel.

4. Procédé selon l'une des revendications 1 à 3, **caractérisé en ce que** le tarif est codé par un élément défini du numéro d'appel de destination.

5. Procédé selon l'une des revendications 1 à 4, **caractérisé en ce que** c'est le nouveau numéro d'appel permettant aux systèmes de facturation une tarification qui est inscrit comme numéro d'appel dans le dossier de facturation.

6. Procédé selon l'une des revendications 1 à 5, **caractérisé en ce qu'**une information de prix est transmise à l'appelant sur son terminal mobile, suivant le tarif déterminé.
